# EUROPEAN PATENT APPLICATION

(11) **EP 4 495 072 A1**
(43) Date of publication of application: **22.01.2025**
(21) Application number: 23770879.7
(22) Date of filing: 16.03.2023
(51) Int. Cl.: C01G 51/00, G03G 9/083

(54) **METHOD FOR PRODUCING COBALT FERRITE PARTICLES AND COBALT FERRITE PARTICLES PRODUCED BY SAME**

(30) Priority: 17.03.2022 JP 2022042172; 09.03.2023 JP 2023036445
(71) Applicant: Nittetsu Mining CO., LTD., Tokyo 100-8377 (JP)
(72) Inventor: ARAI Tsubasa, Nishitama-gun, Tokyo 190-0182 (JP); MURATANI Naoki, Iizuka-shi, Fukuoka 820-0111 (JP); KISHIMOTO Akira, Nishitama-gun, Tokyo 190-0182 (JP); TAKAHASHI Hideyuki, Sendai-shi, Miyagi 980-8579 (JP)
(74) Representative: Potter Clarkson
(86) International application number: PCT/JP2023/010313
(87) International publication number: WO 2023/176926

(57) **Abstract**

Provided are cobalt ferrite particles having a micrometer-order average particle diameter and similar particle diameters. The cobalt ferrite particles are obtained by a method for producing cobalt ferrite particles, including performing a thermal treatment on an aqueous solution containing a divalent iron salt and a divalent cobalt salt stabilized by a complexing agent (ferrite precursor).

## Description

### Technical Field

The present invention relates to a method for producing cobalt ferrite particles and cobalt ferrite particles produced by the same and thus provides cobalt ferrite particles, particularly, having a relatively large average particle diameter and, furthermore, also having a narrow particle size distribution.

### Background Art

Ferrite particles are known as a highly permeable material or a permanent magnet material. Nowadays, magnetic powders have been a new material for copier toners, magnetic inks, MR fluids, and the like, and there is an expectation of improvement in quality or performance thereof.

In particular, cobalt ferrite is known as, among spinel ferrites, a magnetic material having a large crystal magnetic anisotropy and a large coercivity. In addition, cobalt is similar to iron in chemical behaviors and thus has an advantage of ease of a variety of controls in the producing process thereof.

As a method for producing ferrite particles, methods such as a co-precipitation method, a wet oxidation method and a hydrothermal method are known.

The co-precipitation method is a reaction in which two or more kinds of ions are precipitated at the same time. In the case of producing cobalt ferrite particles by the co-precipitation method, an alkali is introduced into an aqueous solution including Fe³⁺ and Co²⁺ ions, and then the resulting solution is heated to accelerate the reaction to thereby obtain nanosized ferrite particles. In this method, the reaction is performed at a temperature of 80°C to 100°C, the average particle diameter of the obtained particles is approximately 20 to 50 nm, and the particle size distribution of the obtained particles is relatively wide (Patent Literature 1).

The wet oxidation method is a method in which an oxidant such as an air is reacted with a starting material aqueous solution including Fe²⁺ and Co²⁺ ions while being heated. In the case of using an air as the oxidant, the reaction temperature is approximately 60°C to 100°C, and particles having a size of approximately 0.05 to 0.3 µm are obtained (Patent Literature 2 and Patent Literature 3). In a method in which a reaction between a starting material aqueous solution and an oxidant liquid is continuously performed, the reaction is performed at a temperature of 30°C to 100°C, and ferrite particles having a size of 3 to 20 nm are obtained (Patent Literature 4).

The hydrothermal method is a method in which a mixture of an aqueous solution including Co²⁺ ions and an aqueous solution including Fe²⁺ ions is used for hydrothermal synthesis in an autoclave, and ferrite particles having relatively large particle diameters of 0.3 to 8 µm are produced by a reaction performed at a high temperature of 160°C to 300°C (Patent Literature 5).

In the case of producing ferrite particles by the conventional technique, ferrite particles can be produced at relatively low temperatures by the co-precipitation method or the wet oxidation method, but only nanometer-order fine particles are obtained. By the hydrothermal method, relatively large micrometer-order particles can be obtained, but there is a need to perform a hydrothermal reaction (Schikorr reaction) at a high temperature and a high pressure, which has a problem with facilities or costs.

### Related Art

### Patent Literature

Patent Literature 1: Japanese Patent No. 4138344
Patent Literature 2: Japanese Patent Publication No. H3-24412
Patent Literature 3: Japanese Patent Publication No. S60-47722
Patent Literature 4: Japanese Patent No. 5504399
Patent Literature 5: Japanese Patent Laid-Open No. H5-275224

### Summary of Invention

### Problem to be solved by the invention

The present invention overcomes the above-described problems of the related art and provides a producing method capable of synthesizing, with a lower energy, cobalt ferrite particles having a larger average particle diameter than conventional cobalt ferrite particles and having similar particle diameters. The present invention also provides cobalt ferrite particles having rounded shapes and similar particle diameters produced by the above-described method.

### Solution to Problem

As means for solving the above-described problems, means having the following configurations is employed in the present invention.
(1) A method for producing cobalt ferrite particles, including performing a thermal treatment on an aqueous solution containing a divalent iron salt and a cobalt salt stabilized by a complexing agent (ferrite precursor).
(2) The method for producing cobalt ferrite particles according to (1), wherein the thermal treatment is a hydrothermal treatment performed in a pressure vessel within a temperature range of 130°C to 260°C.
(3) The method for producing cobalt ferrite particles according to (2), wherein the thermal treatment is a hydrothermal treatment performed in a pressure vessel within a temperature range of 190°C to 240°C.
(4) The method for producing cobalt ferrite particles according to any one of (1) to (3), wherein a trivalent iron salt is further added to the aqueous solution (ferrite precursor).
(5) The method for producing cobalt ferrite particles according to any one of (1) to (4), wherein a pH buffer is further added to the aqueous solution (ferrite precursor).
(6) The method for producing cobalt ferrite particles according to any one of (1) to (5), wherein the divalent iron salt and the cobalt salt are iron(II) chloride and cobalt(II) chloride, respectively.
(7) The method for producing cobalt ferrite particles according to any one of (1) to (6), wherein the divalent iron salt and the cobalt salt are iron(II) sulfate and cobalt(II) sulfate, respectively.
(8) The method for producing cobalt ferrite particles according to any one of (1) to (7), wherein, as the complexing agent, one selected from citrate, nitrilotriacetate or malate is used.
(9) The method for producing cobalt ferrite particles according to any one of (1) to (8), wherein the thermal treatment is performed in the presence of an oxidant in addition to the complexing agent.
(10) The method for producing cobalt ferrite particles according to (9), wherein the oxidant is nitrate.
(11) The method for producing cobalt ferrite particles according to any one of (1) to (10), wherein a seed particle is further added to the aqueous solution (ferrite precursor).
(12) The method for producing cobalt ferrite particles according to (11), wherein the seed particle is iron oxide.
(13) The method for producing cobalt ferrite particles according to any one of (1) to (12), wherein an alkaline aqueous solution or the ferrite precursor is press-injected into a pressure vessel in the middle of the thermal treatment or after an end of the thermal treatment, and a thermal treatment is further performed.
(14) Cobalt ferrite particles having a coefficient of variation of particle diameters, a CV value, of 0.1 to 0.3, a rounded shape and an average particle diameter of 5 to 50 µm.
(15) Cobalt ferrite particles according to (14), wherein a residual magnetic moment is 10 emu/g or more and a coercivity is 100 to 1000 Oe.
(16) A copier toner containing the cobalt ferrite particles according to (15).
(17) A magnetic ink containing the cobalt ferrite particles according to (15).
(18) An MR fluid containing the cobalt ferrite particles according to (15).
(19) A white powder having the cobalt ferrite particles according to (15), wherein a titanium oxide film and a metallic silver film are provided in this order on surfaces of the cobalt ferrite particles.
(20) The white powder according to (19), having a brightness L* of 75 or higher.

### Advantageous Effects of Invention

When the producing method of the present invention is employed, it is possible to produce magnetic particles of cobalt ferrite having similar particle diameters with a low energy compared with magnetic particles produced by conventional methods.

Cobalt ferrite particles obtained by the producing method of the present invention have round shapes and similar particle diameters and are thus expected to be used in applications of copier toners, magnetic inks, and MR fluids. In addition, the cobalt ferrite particles of the present invention can be turned into a white powder having a high brightness by whitening the cobalt ferrite particles by a known method or a powder colored with a bright color by further providing a colored layer.

### Brief Description of Drawings

[Figure 1] Figure 1 is a SEM photograph of a powder sample of Example 1.
[Figure 2] Figure 2 is a SEM photograph of a powder sample of Example 2.
[Figure 3] Figure 3 is a SEM photograph of a powder sample of Example 3.
[Figure 4] Figure 4 is a SEM photograph of a powder sample of Example 4.
[Figure 5] Figure 5 is a SEM photograph of a powder sample of Example 5.
[Figure 6] Figure 6 is a SEM photograph of a powder sample of Example 6.
[Figure 7] Figure 7 is a SEM photograph of a powder sample of Example 7.
[Figure 8] Figure 8 is a SEM photograph of a powder sample of Example 8.
[Figure 9] Figure 9 is a SEM photograph of a powder sample of Example 9.
[Figure 10] Figure 10 is a SEM photograph of a powder sample of Reference Example 1.
[Figure 11] Figure 11 is a SEM photograph of a powder sample of Reference Example 2.
[Figure 12] Figure 12 is a SEM photograph of a powder sample of Comparative Example 1.
[Figure 13] Figure 13A is a cross-sectional conceptual view of a powder sample of Example 6. Figure 13B is a cross-sectional conceptual view of a powder sample of Example 9. Both Figures are based on TEM observations. In the present specification, scanning electron microscope may be referred to as "SEM" and transmission electron microscope may be referred to as "TEM".

### Description of Embodiments

The present invention is characterized in that a ferrite precursor is formed of a divalent iron salt and a cobalt salt, and the ferrite precursor is thermally treated under a high-temperature and high-pressure condition in the presence of a complexing agent.

Hereinafter, a method for producing cobalt ferrite particles of the present invention will be described in a sequence of the steps.

### (Production of ferrite precursor)

First, a divalent iron salt and a cobalt salt are dissolved in deionized and deaerated water to prepare a starting material aqueous solution.

The divalent iron salt that is used in the method of the present invention is not particularly limited, and examples thereof include iron(II) sulfate, iron(II) chloride, iron(II) nitrate and iron(II) acetate. Iron wash waste liquid or the like from shaft furnaces or electric furnaces is also preferable as an inexpensive starting material. The cobalt salt is also not particularly limited and may be any divalent cobalt salt, and examples thereof include cobalt(II) sulfate, cobalt(II) chloride, cobalt(II) nitrate, cobalt(II) acetate, and others. Due to, for example, availability, iron(II) sulfate or iron(II) chloride is preferable as the divalent iron salt, and cobalt(II) sulfate or cobalt(II) chloride is preferable as the divalent cobalt salt.

A trivalent iron salt may be added to the starting material aqueous solution, as described in the section on adjustment of particle diameters below. The trivalent iron salt is not particularly limited, and examples thereof include iron(III) chloride, iron(III) sulfate and iron(III) nitrate, and others. Here, the reason for the use of the deionized and deaerated water is that the charge state of the metallic ions including iron dissolved in the solution is prevented from being affected by a dissolved salt or oxygen. For example, it is known that, when free oxygen is present in the reaction system, divalent iron is oxidized to trivalent iron, and that fine particles having unintended particle diameters are generated.

Next, an alkali and a complexing agent are dissolved in deionized and deaerated water to prepare an alkaline aqueous solution. After that, the starting material aqueous solution and the alkaline aqueous solution are mixed together. As the alkali, an arbitrary alkali such as sodium hydroxide, potassium hydroxide, calcium hydroxide or ammonia is selected.

When the starting material aqueous solution and the alkaline aqueous solution are mixed together, a metal complex of a starting material that is to serve as the ferrite precursor is formed.

In order to stably form the complex, the starting material aqueous solution and the alkaline aqueous solution are preferably mixed in the order as described above. In order to synthesize ferrite particles having favorable characteristics after decomposition of the complex, the pH of the liquid mixture is preferably adjusted to approximately 7 to 13.

### (Complexing agent)

The present invention is, as described above, characterized in that the ferrite precursor is made into a complex with the complexing agent before a thermal treatment to protect the ferrite precursor from being oxidized by an oxidant.

As the complexing agent in the present invention, citrate, nitrilotriacetate, or malate are used, for example.

In the case of using citrate, cobalt ferrite particles having large particle diameters with an average particle diameter of approximately 5 to 50 µm are obtained. In the case of using nitrilotriacetate or malate, fine particles having an average particle diameter of 1 µm or less are obtained.

A ferrite generation reaction in the present invention is considered to progress as described below.

In a stage before the beginning of a hydrothermal treatment, an oxidation reaction by an oxidant is not performed, and the ferrite precursor is stably present in the solution due to the complexation action of a ligand of the complexing agent. This prevents the generation of an unstable hydroxide that is likely to be oxidized and stably protects the precursor.

Next, once heating is initiated, the complex that protects the ferrite precursor gradually decomposes, and the ferrite precursor is likely to receive an oxidation action. At this time, an oxidant such as sodium nitrate may be added thereto in order to uniformly accelerate an oxidation reaction for forming a ferrite. The ferrite precursor is oxidized by the oxidation action of the oxidant in a case where the ferrite precursor is under the environment involving the oxidant, or even in a case where there is no oxidant, the ferrite precursor is oxidized by an action of a hydrothermal environment. Thus, a ferrite is formed.

In the present invention, the progress of the oxidation reaction of the ferrite precursor in a thermal treatment under hydrothermal conditions can be delayed by the complexation action of the complexing agent. This makes it possible to increase the particle diameters of ferrite particles to be synthesized and, furthermore, makes it possible to produce particles having similar particle diameters.

### (Thermal treatment)

In the present invention, a thermal treatment by a hydrothermal method is performed using a pressure vessel.

The pressure vessel used in the present invention may be an ordinary high-pressure reaction container, and examples thereof include an autoclave, a pressure cooker and a boiler. An autoclave is preferable due to versatility, for example.

In the ordinary high-temperature Schikorr method, it is common to allow the reaction to progress at a high temperature of 200°C or higher; however, in the present invention, magnetic particles of cobalt ferrite can be synthesized within a temperature range of approximately 130°C to 300°C, preferably 130 to 280°C, more preferably 130 to 260°C, and more preferably 130 to 240°C by selecting the complexing agent.

The higher the temperature of the heat treatment, the more the reaction is accelerated. The reaction rate of cobalt ferrite particles can be increased to approximately 90% when heat treated at a higher temperature than 190°C, e.g., 200°C.

From the viewpoint of high reaction rate can be expected, the temperature of the heat treatment is preferably higher than 190°C and lower than 300°C. On the other hand, when the reaction temperature is around over 270°C impurities tend to be produced. Thus, from the viewpoint of balancing purity and reaction rate, the reaction temperature is preferably between 190 to 270°C, and more preferably between 190 to 260°C.

### (Adjustment of particle diameters 1: Addition of trivalent iron salt)

In the method for producing cobalt ferrite particles according to the present invention, it is possible to employ means for adjusting the particle diameters of cobalt ferrite particles to be produced in each step of the production method. Hereinafter, several means for adjusting the particle diameters will be listed. These means can be singly employed or a plurality of means can be employed in combination.

A trivalent iron salt can be added to the starting material aqueous solution (the aqueous solution of the divalent iron salt and the cobalt salt) to add the trivalent iron salt to the aqueous solution containing the divalent iron salt and the cobalt salt stabilized by the complexing agent, whereby the particle diameters of cobalt ferrite particles can be adjusted. In this way, since the trivalent iron ions of the trivalent iron salt act as nuclei for the formation of ferrite particles, a ferrite formation reaction is accelerated, regardless of the presence or absence of the oxidant, and the particle diameters of ferrite particles to be produced can be adjusted.

The trivalent iron salt used herein is not particularly limited, and examples thereof include iron(III) chloride, iron(III) sulfate and iron(III) nitrate. Iron wash waste liquid or the like from shaft furnaces or electric furnaces is also preferable as an inexpensive starting material.

### (Adjustment of particle diameters 2: Addition of pH buffer)

A pH buffer can be added to the alkaline aqueous solution (the aqueous solution of the alkali and the complexing agent) to add the pH buffer to the aqueous solution containing the divalent iron salt and the cobalt salt stabilized by the complexing agent, whereby the particle diameters of cobalt ferrite particles can be adjusted. The ferrite generation reaction is a reaction accompanying a decrease in the pH, and the decrease in the pH suppresses the decomposition of the ferrite precursor to thereby suppresses the ferrite generation reaction. Therefore, the pH buffer can be added thereto in order to suppress a decrease in the pH, whereby the growth of ferrite particles can be accelerated.

The pH buffer used herein is selected from boric acid and sodium carbonate/sodium hydrogen carbonate.

### (Adjustment of particle diameters 3: Addition of seed particle)

Nuclei, that are the base on which the cobalt ferrite particles are deposited, can be provided by adding seed particles onto the ferrite precursor. Whereby the particle diameters of the cobalt ferrite particles can be adjusted. The seed particle used herein is not particularly limited, and is selected from inorganic compounds that are insoluble in water, such as metals, alloys, and oxides. Particularly, due to its affinity with cobalt ferrite, iron oxide is preferred. Magnetite can be used as iron oxide.

### (Adjustment of particle diameters 4: Press-injecting of alkaline aqueous solution and ferrite precursor during thermal treatment)

The alkaline aqueous solution or the ferrite precursor (complex) can be press-injected into the pressure vessel in the middle of the thermal treatment step or after the end of the thermal treatment step, followed by further continuing the thermal treatment, whereby the particle diameters of cobalt ferrite particles can be adjusted.

When the alkaline aqueous solution is press-injected, the pH in the reaction container increases, which allows the progress of decomposition of the unreacted ferrite precursor and thus accelerates the ferrite generation reaction. Therefore, particle growth (grain coarsening) can be achieved. The alkaline aqueous solution is not particularly limited and can be appropriately selected from sodium hydroxide, potassium hydroxide, calcium hydroxide, and ammonia.

Press-injecting of the ferrite precursor (complex) is equivalent to addition of a starting material for forming ferrites, which makes it possible to accelerate the particle growth of ferrite particles. The method for producing the ferrite precursor is as described above.

### (Cobalt ferrite particles)

Cobalt ferrite particles produced in the present invention are magnetic particles having relatively large particle diameters with an average particle diameter of 5 to 50 µm. The cobalt ferrite particles are particles having rounded shapes and similar particle diameters. The aspect ratio of the cobalt ferrite particles is almost 1.

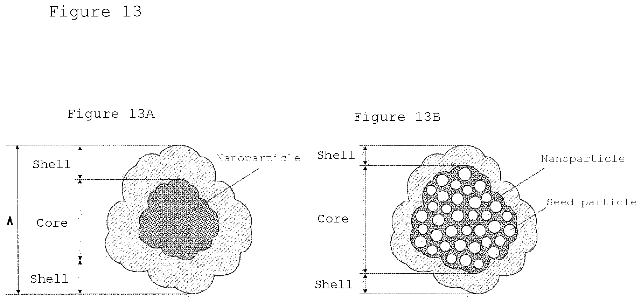

As described in Figure 13A and 13B below, one embodiment of the cobalt ferrite particle is a particle having a core-shell structure.

The cobalt ferrite particles of the present invention have relatively large particle diameters, are rounded and also have a narrow width of the particle size distribution. Therefore, the cohesive property between the particles is weak, and the cobalt ferrite particles can be closely packed when molded, which makes it possible to improve the magnetic characteristics of a molded article or makes it possible to increase the bulk density. Moreover, the particle surfaces are moderately uneven, which makes it easier for pigments to adhere to the particles when used as a magnetic ink, compared to spherical particles with a smooth surface.

Therefore, when used in applications of copier toners, magnetic inks, and MR fluids, the cobalt ferrite particles are capable of sufficiently exhibiting the characteristics.

### (White powder)

The cobalt ferrite particles of the present invention can be made into a white powder by whitening or can be made into a colored powder by being whitened and then further provided with a colored layer.

The cobalt ferrite particles can be whitened by a known method, but are desirably whitened by, for example, a whitening method (Japanese Patent No. 4113045), which is patented by the present applicants.

This whitening method is a method for whitening powder by providing a titanium oxide film between a base particle and a metallic silver film. Specifically, the cobalt ferrite particles can be whitened by forming a titanium oxide film on the surface of the cobalt ferrite particle by the hydrolysis of a titanium alkoxide (for example, International Publication No. WO 96/28269), a reaction from a titanium salt aqueous solution (for example, Japanese Patent Laid-Open No. 11-131102), or the like and then forming a metallic silver film by a known method such as an electroless plating method.

This method makes it possible to produce a white powder having a titanium oxide film and a metallic silver film in this order on the surface of the cobalt ferrite particle of the present invention and consequently makes it possible to improve the brightness L* of the cobalt ferrite particle to 75 or higher.

### Examples

Hereinafter, the present invention will be described in more detail by way of examples, but the present invention is not limited to these examples. In addition, the average particle diameter and particle size distribution of synthesized ferrite particles were measured by the following methods.

### (Measurement of average particle diameter)

An image in which a grid composed of 16 vertical lines and 16 horizontal lines evenly disposed was drawn on a scanning electron microscope (SEM) image of a powder sample was printed, the diameters of a total of 256 particles that were on intersections of the vertical lines and the horizontal lines or closest to the intersections were measured with a caliper, and the average value was obtained. In addition, the length of a scale bar on the SEM image was measured, and the particle diameters obtained in the unit of millimeters were converted to the particle diameters in the unit of micrometers using the value of the length of the scale bar. The result was used as the average particle diameter.

### (Measurement of particle size distribution)

Whether the cobalt ferrite particles of the present invention have similar particle diameters was determined with a CV value, which is a coefficient of variation of the particle diameters.

Specifically, statistically, the standard deviation is used as one of measure for variations in data distribution; however, currently, the standard deviation is standardized by dividing it by the arithmetic average value of the data to evaluate a variation in data. This is the CV value, which is a coefficient of variation, and, in the present invention as well, the CV value is used to evaluate the fact that the particle diameters of the formed cobalt ferrite particles vary to a small extent. A small CV value indicates that the variation in the particle size distribution is small. Particularly, particles having a CV value of 0.1 or less are considered as monodisperse particles, and the characteristics thereof are attracting attention.

### (Measurement of magnetic characteristic)

The magnetic characteristics of the cobalt ferrite particles of the present invention were evaluated by a vibrating sample magnetometer (VSM) (Tamagawa Manufacturing Co., Ltd., model number "TM-VSM101483N7-MRO"). A hysteresis curve or a demagnetization curve was obtained at a maximum magnetic field of 10,000 Oe, and a saturation magnetic moment, a residual magnetic moment, and a coercivity were measured.

### [Example 1] (Production of cobalt ferrite particles)

### (1) Preparation of deionized and deaerated water

480 g of deionized water was deaerated with 2.5 L/min of N₂ for 30 minutes to prepare deionized and deaerated water.

### (2) Preparation of starting material aqueous solution

32 g of iron(II) chloride tetrahydrate (FeCl₂·4H₂O) and 8 g of cobalt(II) chloride hexahydrate (CoCl₂·6H₂O) were dissolved in 172 g of the deionized and deaerated water to prepare a starting material aqueous solution.

### (3) Preparation of complexing agent aqueous solution

86 g of trisodium citrate dihydrate (C₆H₅Na₃O₇·2H₂O) and 5 g of sodium nitrate (NaNO₃) were dissolved in 168 g of the deionized and deaerated water to prepare a complexing agent aqueous solution.

### (4) Preparation of alkaline aqueous solution

10 g of sodium hydroxide (NaOH) was dissolved in 25 g of the deionized and deaerated water to prepare an alkaline aqueous solution.

### (5) Preparation of precursor

The starting material aqueous solution and the complexing agent aqueous solution were mixed in a N₂-purged container, and then the alkaline aqueous solution was added thereto to adjust the pH to 10, thereby preparing a precursor.

### (6) Preparation of magnetic particles by hydrothermal treatment of precursor

The precursor was put into a N₂-purged autoclave and hydrothermally treated under stirring at 190°C for 20 hours, thereby obtaining magnetic particles.

### (7) Washing of magnetic particles

The magnetic particles were filtered and washed with passing deionized water.

### (8) Drying of magnetic particles

The washed magnetic particles were dried at 110°C in the atmosphere for two hours.

### [Example 2]

Magnetic particles were produced under the same conditions as in Example 1 except that sodium nitrate added as an oxidant in Example 1 was not used.

### [Example 3]

Magnetic particles were produced under the same conditions as in Example 1, except that the pH, that was adjusted to 10 by the addition of the alkaline aqueous solution in (5) of Example 1, was changed to 8; and the hydrothermal treatment time in (6) of Example 1 was changed to 40 hours.

### [Example 4]

Magnetic particles were produced under the same conditions as in Example 1 except that
the amounts of iron(II) chloride tetrahydrate (FeCl₂·4H₂O), cobalt (II) chloride hexahydrate (CoCl₂·6H₂O) in (2) of Example 1 were changed to 25.7 g, 15.4 g, respectively;
the amounts of trisodium citrate dihydrate (CeH₅Na₃O₇·2H₂O) and sodium nitrate (NaNO₃) in (3) of Example 1 were changed to 59.9 g and 1.7 g, respectively.

### [Example 5]

Magnetic particles were produced under the same conditions as in Example 1 except that
the amounts of deionized water in (1) of Example 1 was changed to 2300.0 g; the amounts of iron(II) chloride tetrahydrate (FeCl₂·4H₂O), cobalt (II) chloride hexahydrate (CoCl₂·6H₂O) and the deionized and deaerated water in (2) of Example 1 were changed to 337.3 g, 80.7 g and 827.5 g, respectively;
the amounts of trisodium citrate dihydrate (C₆H₅Na₃O₇·2H₂O), sodium nitrate (NaNO₃) and the deionized and deaerated water in (3) of Example 1 were changed to 604.7 g, 17.3 g and 807.8 g, respectively;
the amounts of sodium hydroxide (NaOH) and the deionized and deaerated water in (4) of Example 1 were changed to 86.4 g and 93.6 g, respectively;
the condition of the hydrothermal treatment in (6) of Example 1 was changed to 200°C for 16 hours; and
the condition of drying in (8) of Example 1 was changed to 250°C in the atmosphere for 1 hour.

### [Example 6]

Magnetic particles were produced under the same conditions as in Example 1 except that
the amounts of deionized water and the flow rate of N₂ in (1) of Example 1 were changed to 13000.0 and 10 L/min, respectively;
32 g of iron(II) chloride tetrahydrate (FeCl₂·4H₂O), 8 g of cobalt(II) chloride hexahydrate (CoCl₂·6H₂O), the amounts of the deionized and deaerated water in (2) of Example 1 were changed to 2690.0 g of iron(II) sulfate heptahydrate (FeSO₄·7H₂O), 544.0 g of cobalt(II) sulfate heptahydrate (CoSO₄·7H₂O) and 4718.7g, respectively;
the amounts of trisodium citrate dihydrate (C₆H₅Na₃O₇·2H₂O), sodium nitrate (NaNO₃) and the deionized and deaerated water in (3) of Example 1 were changed to 3448.0 g, 99.0 g and 4606.3 g, respectively;
the amounts of sodium hydroxide (NaOH) and the deionized and deaerated water in (4) of Example 1 were changed to 480.0 g and 520.0 g, respectively;
the pH in (5) of Example 1 was changed to 9;
the condition of the hydrothermal treatment in (6) of Example 1 was changed to 240°C for 0 hour (cooling immediately after reaching 240°C); and
the condition of drying in (8) of Example 1 was changed to 250°C in the atmosphere for 1 hour.

### [Example 7]

Magnetic particles were produced under the same conditions as in Example 1 except that
the amounts of deionized water and the flow rate of N₂ in (1) of Example 1 were changed to 12000.0 g and 10 L/min, respectively;
the amounts of iron(II) chloride tetrahydrate (FeCl₂·4H₂O), cobalt (II) chloride hexahydrate (CoCl₂·6H₂O) and the deionized and deaerated water in (2) of Example 1 were changed to 1923.0 g, 460.0 g and 4436.3 g, respectively;
the amounts of trisodium citrate dihydrate (C₆H₅Na₃O₇·2H₂O), sodium nitrate (NaNO₃) and the deionized and deaerated water in (3) of Example 1 were changed to 3448.0 g, 99.0 g and 4330.7 g, respectively;
the amounts of sodium hydroxide (NaOH) and the deionized and deaerated water in (4) of Example 1 were changed to 480.0 g and 520.0 g, respectively; and the pH in (5) of Example 1 was changed to 9;
the condition of the hydrothermal treatment in (6) of Example 1 was changed to 260°C for 0 hour (cooling immediately after reaching 260°C); and
the condition of drying in (8) of Example 1 was changed to 250°C in the atmosphere for 1 hour.

### [Example 8]

Magnetic particles were produced under the same conditions as in Example 1 except that
the amounts of deionized water in (1) of Example 1 was changed to 750.0 g;
32 g of iron(II) chloride tetrahydrate (FeCl₂·4H₂O), 8 g of cobalt(II) chloride hexahydrate (CoCl₂·6H₂O), the amounts of the deionized and deaerated water in (2) of Example 1 were changed to 125.8 g of iron(II) sulfate heptahydrate (FeSO₄·7H₂O), 63.6 g of cobalt (II) sulfate heptahydrate (CoSO₄·7H₂O) and 142.7 g, respectively;
the amounts of trisodium citrate dihydrate (C₆H₅Na₃O₇·2H₂O), sodium nitrate (NaNO₃) and the deionized and deaerated water in (3) of Example 1 were changed to 205.6 g, 5.8 g and 394.0 g, respectively; and
the amounts of sodium hydroxide (NaOH) and the deionized and deaerated water in (4) of Example 1 were changed to 35.0 g and 37.9 g, respectively.

### [Example 9]

Magnetic particles were produced under the same conditions as in Example 1 except that
the amounts of sodium nitrate (NaNO₃) in (3) of Example 1 was changed to 1.7 g; and
0.8 g of magnetite (Fe₃O₄), a type of iron oxide, was added to the autoclave as a seed particle along with the precursor in (6) of Example 1.

### [Reference example 1]

Magnetic particles were produced under the same conditions as in Example 1 except that the amounts of deionized water and the flow rate of N₂ in (1) of Example 1 were changed to 12000.0 g and 10 L/min, respectively;
the amounts of iron(II) chloride tetrahydrate (FeCl₂·4H₂O), cobalt (II) chloride hexahydrate (CoCl₂·6H₂O) and the deionized and deaerated water in (2) of Example 1 were changed to 1923.0 g, 460.0 g and 4436.3 g, respectively;
the amounts of trisodium citrate dihydrate (C₆H₅Na₃O₇·2H₂O), sodium nitrate (NaNO₃) and the deionized and deaerated water in (3) of Example 1 were changed to 3448.0 g, 99.0 g and 4330.7 g, respectively;
the amounts of sodium hydroxide (NaOH) and the deionized and deaerated water in (4) of Example 1 were changed to 480.0 g and 520.0 g, respectively;
the pH in (5) of Example 1 was changed to 9;
the condition of the hydrothermal treatment in (6) of Example 1 was changed to 300°C for 0.5 hour; and
the condition of drying in (8) of Example 1 was changed to 250°C in the atmosphere for 1 hour.

### [Reference example 2]

Magnetic particles were produced under the same conditions as in Example 1 except that
the amounts of deionized water and the flow rate of N₂ in (1) of Example 1 were changed to 13000.0 g and 10 L/min, respectively;
32 g of iron(II) chloride tetrahydrate (FeCl₂·4H₂O), 8 g of cobalt(II) chloride hexahydrate (CoCl₂·6H₂O), the amounts of the deionized and deaerated water in (2) of Example 1 were changed to 2690.0 g of iron(II) sulfate heptahydrate (FeSO₄·7H₂O), 544.0 g of cobalt(II) sulfate heptahydrate (CoSO₄·7H₂O) and 4718.7 g, respectively;
the amounts of trisodium citrate dihydrate (C₆H₅Na₃O₇·2H₂O), sodium nitrate (NaNO₃) and the deionized and deaerated water in (3) of Example 1 were changed to 3448.0 g, 99.0 g and 4606.3 g, respectively;
the amounts of sodium hydroxide (NaOH) and the deionized and deaerated water in (4) of Example 1 were changed to 480.0 g and 520.0 g, respectively;
the pH in (5) of Example 1 was changed to 9;
the condition of the hydrothermal treatment in (6) of Example 1 was changed to 300°C for 0.5 hour; and
the condition of drying in (8) of Example 1 was changed to 250°C in the atmosphere for 1 hour.

### [Comparative Example 1]

Magnetic particles were produced under the same conditions as in Example 1 except that the complexing agent and the oxidant used in Example 1 were not used.

A variety of characteristics of the magnetic particles are summarized and shown below.

**[Table 1]**

| | Example 1 | Example 2 | Example 3 | Example 4 | Example 5 | Example 6 | Example 7 | Example 8 | Example 9 | Reference example 1 | Reference example 2 | Comparative Example 1 |
|---|---|---|---|---|---|---|---|---|---|---|---|---|
| Complexing agent | Citrate | Citrate | Citrate | Citrate | Citrate | Citrate | Citrate | Citrate | Citrate | Citrate | Citrate | Not used |
| Oxidant | Nitrate | Not used | Nitrate | Nitrate | Nitrate | Nitrate | Nitrate | Nitrate | Nitrate | Nitrate | Nitrate | Not used |
| Divalent iron salt | Iron(II) chloride | Iron(II) chloride | Iron(II) chloride | Iron(II) chloride | Iron(II) chloride | Iron(II) sulfate | Iron(II) chloride | Iron(II) sulfate | Iron(II) chloride | Iron(II) chloride | Iron(II) sulfate | Iron(II) chloride |
| Cobalt salt | Cobalt(II) chloride | Cobalt(II) chloride | Cobalt(II) chloride | Cobalt(II) chloride | Cobalt(II) chloride | Cobalt(II) sulfate | Cobalt(II) chloride | Cobalt(II) sulfate | Cobalt(II) chloride | Cobalt(II) chloride | Cobalt(II) sulfate | Cobalt(II) chloride |
| Seed particle | Not used | Not used | Not used | Not used | Not used | Not used | Not used | Not used | Iron oxide | Not used | Not used | Not used |
| Reaction temperature (°C) | 190 | 190 | 190 | 190 | 200 | 240 | 260 | 190 | 190 | 300 | 300 | 190 |
| Reaction time (hour) | 20 | 20 | 20 | 20 | 16 | 0 | 0 | 20 | 20 | 0.5 | 0.5 | 4 |
| Average particle diameter (µm) | 25.90 | 16.49 | 47.38 | 6.84 | 11.88 | 7.11 | 10.91 | 12.66 | 9.65 | 13.28 | 13.43 | 0.47 |
| Standard deviation (µm) | 3.97 | 2.82 | 7.74 | 1.43 | 2.77 | 1.74 | 2.44 | 2.58 | 1.94 | 3.1 | 3.41 | 0.15 |
| CV value | 0.15 | 0.17 | 0.16 | 0.21 | 0.23 | 0.24 | 0.22 | 0.2 | 0.2 | 0.23 | 0.25 | 0.32 |
| Saturation magnetic moment (emu/g) | 84.28 | 84.42 | 82.12 | 78.86 | 81.84 | 75.01 | 76.76 | 80.58 | 83.51 | 75.68 | 73.26 | 83.98 |
| Residual magnetic moment (emu/g) | 12.62 | 11.18 | 20.48 | 20.79 | 22.12 | 22.82 | 28.11 | 21.29 | 13.54 | 31.96 | 32.75 | 25.3 |
| Coercivity (Oe) | 170.4 | 142.3 | 278.7 | 310.3 | 308.6 | 296.4 | 619.1 | 284 | 216.7 | 996.6 | 1143 | 678.2 |
| Reaction rate (%) | 67.5 | 12.9 | 66.3 | 63.4 | 91.4 | 38.8 | 89.5 | 50.2 | 75.7 | 99.9 | 99.9 | 80.6 |
| Impurity | No | No | No | No | No | No | No | No | No | Yes | Yes | Yes |

The reaction rate in the table is basically calculated according to the following formula A. Examples 6 and 7 and Reference Examples 1 and 2 were calculated according to Formula B. This is because the magnetic particles were obtained by partially removing the contents from the autoclave during heating, so it was not appropriate to use Formula A, which uses the cobalt ferrite yield when the total amount of precursor reacts completely, as the denominator. Mass of powder actually obtained by hydrothermal treatment of ferrite precursor/ {theoretical mass of cobalt ferrite (CoxFe(3-x)O4) obtained when all iron and cobalt in the prepared raw materials are reacted} x 100 {1-(mass concentration of dissolved iron and cobalt in aqueous solution after completion of hydrothermal treatment)/ (theoretical mass concentration of iron and cobalt in ferrite precursor before hydrothermal treatment)}×100

In all of Examples 1 to 9, the ferrite particles were formed by performing the thermal treatment on the ferrite precursor stabilized by the complexing agent, and the obtained particles were ferrite particles having a large average particle diameter with a small variation in the particle diameters. Since the CV values were 0.15, 0.17, 0.16, 0.21, 0.23, 0.24, 0.22, 0.20and 0.20, the particles were nearly monodispersed particles.

On the other hand, in the case of the production under the conditions of the comparative example 1, all of the obtained particles had a small average particle diameter with a large variation.

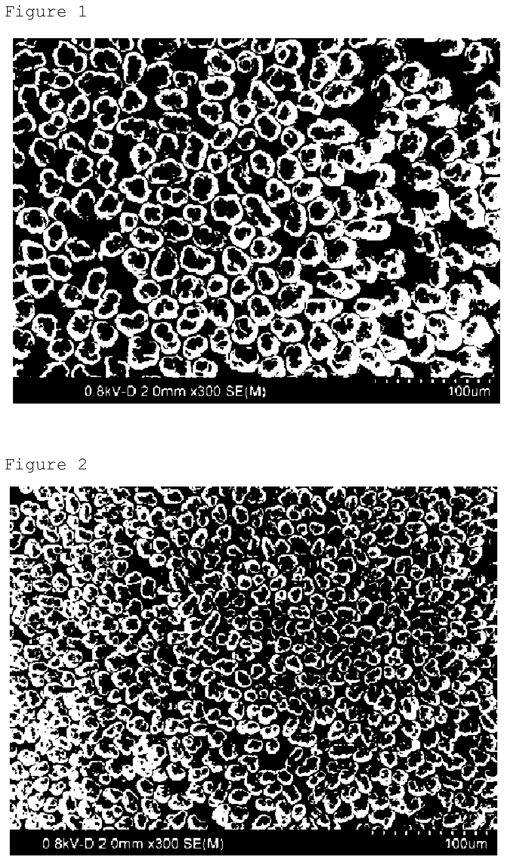

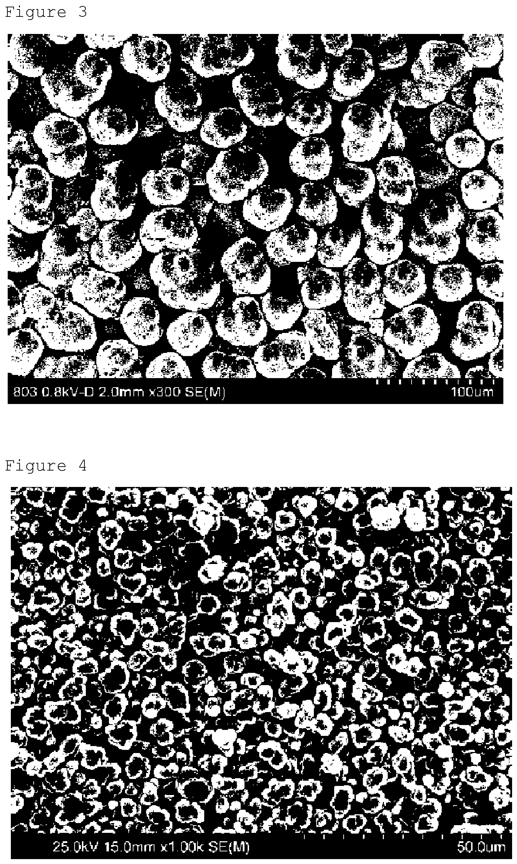

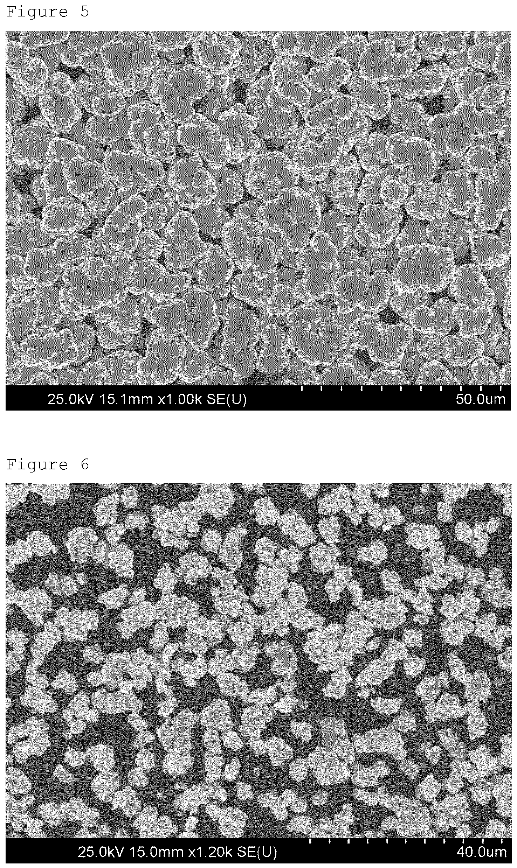

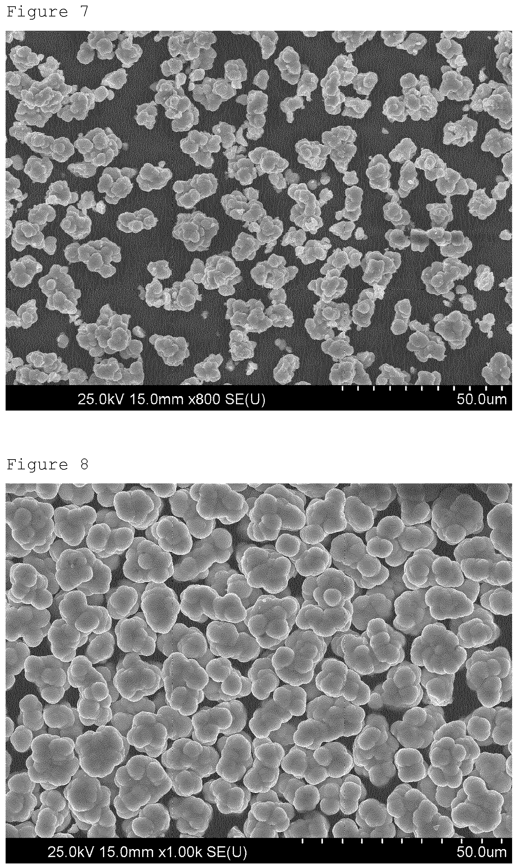

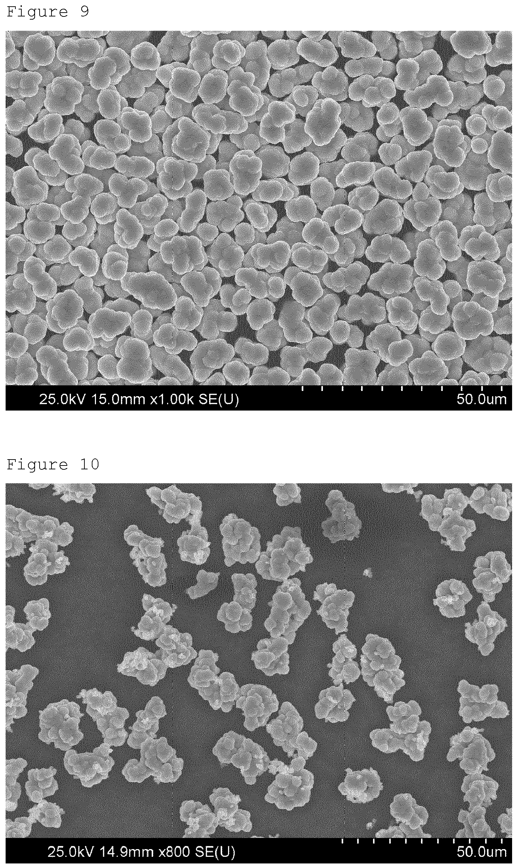

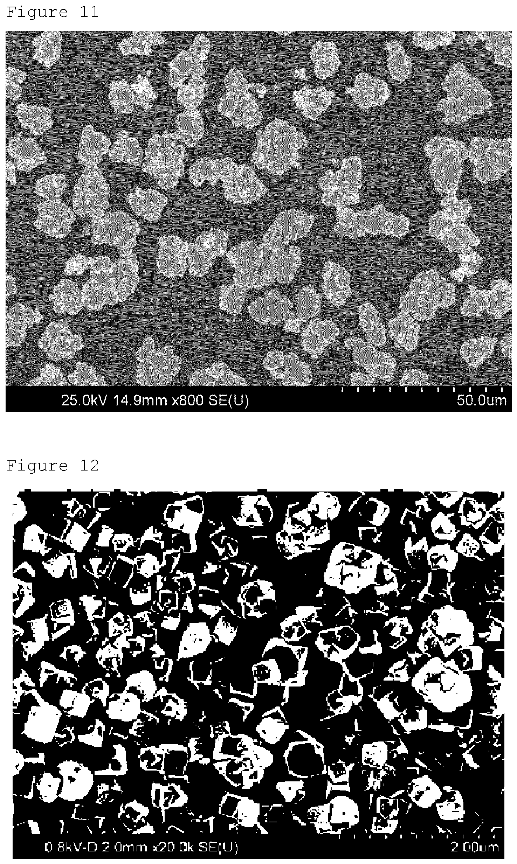

Figure 1 to Figure 9 are SEM photographs of the powder samples of Examples 1 to 9, Figures 10 and 11 are SEM photographs of the powder samples from Reference Examples 1 and 2, respectively, and Figure 12 is an SEM photograph of a powder sample from Comparative Example 1. By SEM observation of the shape of the produced ferrite particles, it is shown that the ferrite particles of Examples 1 to 7 are different from the ferrite particles of Comparative Example 1 of Figure 12 in that the ferrite particles were rounded.

The results of Example 5 showed that the reaction rate of the powder sample was 91.4% by adjusting the reaction temperature to 200°C. Thus, it was shown that the reaction rate of the powder sample was improved by increasing the reaction temperature higher than 190°C.

The results of Reference Examples 1 and 2 showed that the reaction rate of the powder sample was 99.9% by adjusting the reaction temperature to 300°C. Thus, it was shown that a reaction temperature of 300°C is preferable to increase the reaction rate of the powder sample. On the other hand, it was shown that impurities were produced by adjusting the reaction temperature to 300°C. Thus, from the viewpoint of balancing purity and reaction rate, , e reaction temperature of less than 300°C is preferable. Moreover, from the comparison between Example 7 and Reference Example 1, it was shown that a reaction temperature of 260°C or less is more preferable.

Transmission electron microscopy (TEM) observations were performed to confirm the cross-sectional structure of the obtained particles. Then, as a representative example of particles without seed particles, Figure 13A shows a conceptual cross-sectional view of the powder of Example 6, and as a representative example of particles with seed particles, Figure 13B shows a conceptual cross-sectional view of the powder of Example 9.

As shown in Figure 13A, the particles were confirmed to have a core-shell structure with a core section consisting of multiple nanoparticles and a shell section with a series of rounded protrusions on the surface.

As shown in Figure 13B, when the particles were prepared using seed particles, the core part was confirmed to have a so-called sea-island structure, in which multiple seed particles float in a sea consisting of multiple nanoparticles. In the present document, simply "particle size" shall refer to the diameter of the outermost shell of the core-shell structured particles, as indicated by the arrow A in Figure 13A.

### [Example 10] (Whitening of cobalt ferrite particles)

2.2 mL of a titanium tetrachloride solution (16.0 to 17.0% in terms of Ti), 5.84 g of aqueous ammonia, and 10.0 g of hydrogen peroxide water were mixed with 19.8 g of deionized water to prepare a yellow transparent peroxotitanic acid solution. 9.92 g of boric anhydride, 11.72 g of potassium chloride, and 2.55 g of sodium hydroxide were dissolved in 535.81 g of deionized water, and 16.75 g of the ferrite particles obtained in Example 4 were suspended therein. The peroxotitanic acid solution was dropped into and mixed with the suspension while the suspension is stirred, and then suspended solids were dried, thereby obtaining a titanium oxide film-coated powder.

1.2 g of glucose, 0.12 g of tartaric acid, and 2.12 g of ethanol were dissolved in 26.56 g of deionized water to prepare a reduction liquid. 1.25 g of sodium hydroxide, 1.75 g of silver nitrate, and 3 g of aqueous ammonia were mixed with 90 g of deionized water to prepare a silver ammine complex solution, and 6.3 g of the titanium oxide-coated powder was suspended in the silver ammine complex solution. The reduction liquid was mixed with the suspension while the suspension is irradiated with ultrasonic waves, and the suspended solids were dried, thereby obtaining a silver film-coated powder. The obtained white powder had a brightness L* of 79.98.

### Industrial Applicability

Cobalt ferrite particles obtained by the producing method of the present invention have round shapes and similar particle diameters and are thus expected to be used in applications of copier toners, magnetic inks, and MR fluids.

## Claims

1. A method for producing cobalt ferrite particles, comprising
performing a thermal treatment on an aqueous solution containing a divalent iron salt and a cobalt salt stabilized by a complexing agent (ferrite precursor).

2. The method for producing cobalt ferrite particles according to claim 1, wherein the thermal treatment is a hydrothermal treatment performed in a pressure vessel within a temperature range of 130°C to 260°C.

3. The method for producing cobalt ferrite particles according to claim 2, wherein the thermal treatment is a hydrothermal treatment performed in a pressure vessel within a temperature range of 190°C to 240°C.

4. The method for producing cobalt ferrite particles according to any one of claims 1 to 3, wherein a trivalent iron salt is further added to the aqueous solution (ferrite precursor).

5. The method for producing cobalt ferrite particles according to any one of claims 1 to 3, wherein a pH buffer is further added to the aqueous solution (ferrite precursor).

6. The method for producing cobalt ferrite particles according to any one of claims 1 to 3, wherein the divalent iron salt and the cobalt salt are iron(II) chloride and cobalt(II) chloride, respectively.

7. The method for producing cobalt ferrite particles according to any one of claims 1 to 3, wherein the divalent iron salt and the cobalt salt are iron(II) sulfate and cobalt(II) sulfate, respectively.

8. The method for producing cobalt ferrite particles according to any one of claims 1 to 3, wherein, as the complexing agent, one selected from citrate, nitrilotriacetate or malate is used.

9. The method for producing cobalt ferrite particles according to any one of claims 1 to 3, wherein the thermal treatment is performed in the presence of an oxidant in addition to the complexing agent.

10. The method for producing cobalt ferrite particles according to claim 9, wherein the oxidant is nitrate.

11. The method for producing cobalt ferrite particles according to any one of claims 1 to 3, wherein a seed particle is further added to the aqueous solution (ferrite precursor).

12. The method for producing cobalt ferrite particles according to claim 11, wherein the seed particle is iron oxide.

13. The method for producing cobalt ferrite particles according to any one of claims 1 to 3, wherein
an alkaline aqueous solution or the ferrite precursor is press-injected into a pressure vessel in the middle of the thermal treatment or after an end of the thermal treatment, and
a thermal treatment is further performed.

14. Cobalt ferrite particles having a coefficient of variation of particle diameters, a CV value, of 0.1 to 0.3, a rounded shape and an average particle diameter of 5 to 50 µm.

15. Cobalt ferrite particles according to claim 14, wherein a residual magnetic moment is 10 emu/g or more and a coercivity is 100 to 1000 Oe.

16. A copier toner comprising the cobalt ferrite particles according to claim 15.

17. A magnetic ink comprising the cobalt ferrite particles according to claim 15.

18. An MR fluid comprising the cobalt ferrite particles according to claim 15.

19. A white powder comprising the cobalt ferrite particles according to claim 15,
wherein a titanium oxide film and a metallic silver film are provided in this order on surfaces of the cobalt ferrite particles.

20. The white powder according to claim19, having a brightness L* of 75 or higher.
